# EUROPEAN PATENT APPLICATION

(11) **EP 4 644 840 A1**
(43) Date of publication of application: **05.11.2025**
(21) Application number: 25171710.4
(22) Date of filing: 22.04.2025
(51) Int. Cl.: G01C 21/34

(54) **IDENTIFYING AND RESOLVING DEVIATIONS BETWEEN ROUTES GENERATED BY DIFFERENT ROUTING SYSTEMS**

(30) Priority: 29.04.2024 US 202418649915
(71) Applicant: Microsoft Technology Licensing, LLC, Redmond, WA 98052-6399 (US)
(72) Inventor: PREDOVIC, Goran, Redmond, 98052-6399 (US); KAKKAR, Varun, Redmond, 98052-6399 (US); KHANNA, Mohit, Redmond, 98052-6399 (US); WHITBECK, Jacob Nicholas, Redmond, 98052-6399 (US)
(74) Representative: Murgitroyd & Company

(57) **Abstract**

A technique is described herein for reliably comparing a first route produced by a first routing system with a second route produced by a second routing system. In some implementations, the technique includes: generating an envelope that encloses second-route data associated with the second route; identifying a segment of the first route having first-route data points that lie outside the envelope; classifying a cause of a deviation associated with the segment based on segment data that describes the segment; and performing an action based on classification of the deviation. The technique is fast, resource efficient, accurate, and resilient to the fact that the first and second routing systems potentially use different rules and/or map data to produce their routes. The results of the technique can be leveraged to improve the performance of the first routing system.

## Description

### BACKGROUND

Various techniques are available for comparing two data sets, including Fréchet distance, Harsdorf distance, Dynamic Time Warping, etc. But these techniques are slow and have high resource demands. Further, these techniques provide unreliable results in those cases in which the two data sets originate from different processes, and in which the two data sets exhibit differences that depend on their respective originating processes. General-purpose techniques also often reach faulty conclusions when applied to the geospatial domain.

### SUMMARY

A technique is described herein for reliably comparing a first-system route (referred to as a first route for brevity) produced by a first routing system with a second-system route (referred to as a second route for brevity) produced by a second routing system. For instance, the first and second routing systems may correspond to different respective providers of network-accessible routing services. In some implementations, the technique includes: generating an envelope that encloses second-route data associated with the second route, the envelope being a representation of a geographical region having a border that encloses the second route and through which the second route runs; identifying a segment of the first route having first-route data points that lie outside the envelope; classifying a cause of a deviation based on segment data that is associated with the segment; and performing an action based on the classification of the deviation. Among other possible uses, the classification can be leveraged to improve the performance of the first routing system and/or the second routing system.

According to some implementations, the classification is selected from a class of deviations that includes: a) a map snapping-related difference associated with a discrepancy in associating route data with road network data; b) a difference caused by a permissible route diversion taken by the first route; c) a difference caused by a road segment that is non-navigable to the first routing system; and d) a difference in how the first routing system and the second routing system model the same physical roadway.

According to some implementations, one post-classification action includes identifying a pair of routes that are validated by the technique as free from route deviations (meaning that the pair of routes follow the same path, within a specified tolerance). The technique then compares an estimated time of arrival of a first route of the pair with an estimated time of arrival of the second route of the pair.

According to some implementations, another post-classification action includes modifying the first routing system and/or the second routing system to improve a quality of routes produced thereby.

Among its technical merits, the technique takes considerably less time to compare two routes compared to other techniques, such as Fréchet distance. Further, the technique is resilient to map-related and algorithmic differences in the first and second routing systems that produce the routes.

The above-summarized technology is capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

### BRIEF DESCRIPTION OF DRAWINGS

Fig. 1 shows a route-comparing system for comparing a first route with a second route, the two routes being produced by first and second routing systems, respectively.
Fig. 2 shows an example of a deviation that the routing-comparing system of Fig. 1 is capable of detecting and classifying.
Fig. 3 shows an example of the operation of a mismatch-detecting component, which is part of the route-comparing system of Fig. 1.
Fig. 4 shows an example of the operation of a classifying component, which is another part of the route-comparing system of Fig. 1.
Figs. 5 and 6 show two examples of pairs of routes that exhibit snapping-related deviations.
Figs. 7 provides an enlarged view of a mid-route deviation between a particular first route and a particular second route. The deviation includes a first path taken by the first route, and a second path taken by the second route, the second path being different than the first path.
Fig. 8 shows a possible outcome when the first routing system is requested to follow the second path of Fig. 7 instead of the first path. The outcome shown in Fig. 8 indicates that the first path is a permissible diversion taken by the first routing system, which is capable of taking either the first path or the second path.
Fig. 9 shows a possible outcome when the second routing system is requested to follow the first path of Fig. 7, instead of second path.
Fig. 10 shows a deviation between two routes caused by different modeling techniques used by the first and second routing systems.
Fig. 11 shows functionality for using the results of the route-comparing system of Fig. 1 to identify a pair of routes that are free of deviations, and to compare the estimated time of arrival of a first route of the pair with an estimated time of arrival of a second route of the pair.
Fig. 12 is a graph that illustrates time-of-arrival discrepancies between two routes generated by two respective versions of a routing system.
Fig. 13 is a flowchart that provides an overview of one manner of operation of the route-comparing system of Fig. 1.
Fig. 14 shows computing equipment that, in some implementations, is used to implement the computing system of Fig. 1.
Fig. 15 shows an illustrative type of computing system that, in some implementations, is used to implement any aspect of the features shown in the foregoing drawings.

The same numbers are used throughout the disclosure and figures to reference like components and features.

### DETAILED DESCRIPTION

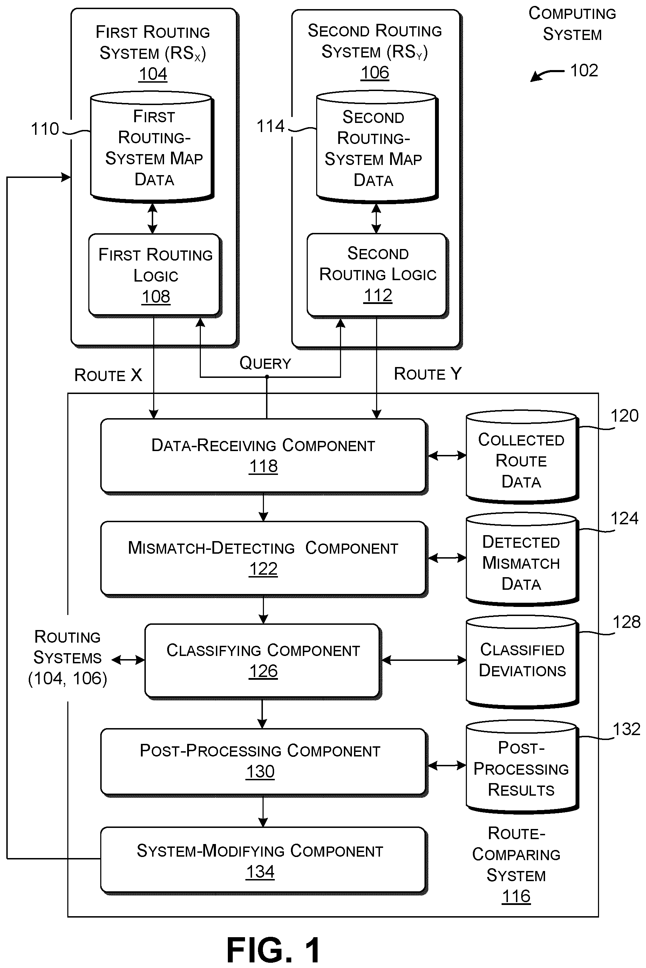

Fig. 1 shows a computing system 102 for comparing a first-system route (route X) produced by a first routing system (RSx) 104 with a second-system route (route Y) produced by a second routing system (RS_{Y}) 106. The first-system route X and the second-system route Y are referred to below for brevity as a first route X and second route Y, respectively. In some implementations, the first routing system 104 and the second routing system 106 are two network-accessible services that generate routes based on route requests received from user devices. In some examples, the two routing systems (104, 106) are administered by two respective entities. In some examples, each request specifies a starting location and an ending location, and optionally other trip-specific constraints (such as date and time of day). In response to the request, each routing system generates a route between the starting location and the second location. The route includes a plurality of waypoints and associated trip segments between the starting location and the ending location. One commercially available routing system is BING MAPS, provided by MICROSOFT CORPORATION of Redmond, Washington. Another commercially available routing system is GOOGLE MAPS, provided by ALPHABET INC. of Mountain View, California.

In other applications, the first routing system 104 and the second routing system 106 are different versions of a same routing system provided by a single entity. In this context, the purpose of the operations described herein is to assess the quality of routes generated by one version (e.g., version 2.0) of the routing system compared to another version (e.g., version 1.0) of the routing system. The expectation is that version 1.0 provides more thoroughly vetted route data because it has been in existence longer than version 2.0, even though the routes provided by version 2.0 may prove to be more accurate than the routes provided by version 1.0.

In some implementations, each routing system uses provider-specific map data and provider-specific route-finding algorithms. For example, the first routing system 104 uses first routing logic 108 that makes reference to first routing-system map data in a data store 110. The second routing system 106 uses second routing logic 112 that makes reference to second routing-system map data in a data store 114. In some implementations, the first routing logic 108 uses different algorithms than the second routing logic 112, and/or the first routing-system map data in the data store 110 is different than the second routing-system map data in the data store 114.

Examples of routing algorithms include Dijkstra's algorithm, the A* algorithm, the Floyd-Warshall algorithm, Johnson's algorithm, the Customizable Route Planning (CRP) algorithm (described, for instance, in Delling, et al., "Customizable Route Planning," in Proceedings of the 10th International Symposium on Experimental Algorithms (SEA'11), May 2011, 12 pages), and so on. Machine-trained models for assisting in the task of route planning include various supervised techniques and reinforcement learning techniques, e.g., as described in Bogyrbayevay, et al., "Learning to Solve Vehicle Routing Problems: A Survey," arXiv, arXiv:2205.02453v1 [cs.LG], May 5, 2023, May 2022, 21 pages. This is a non-exhaustive list; other routing systems use yet other types of routing technology or combinations thereof.

The first routing-system map data is capable of differing from the second routing-system map data in any one or more of the following respects: a) by having different understandings of the roads that are available for use in a road network; b) by having different understanding of the geographical placement of those roads; c) by using different approaches to model the road network; d) by describing the rules that apply to the road network in different ways; e) by approximating the traffic conditions exhibited by the road network in different ways, and so on.

Based on the above variations, a first route X produced by the first routing system 104 is capable of differing from the second route Y produced by the second routing system 106, even though the same route request was submitted to both first routing system 104 and the second routing system 106. For instance, in some examples, the first route X specifies a path that is not acknowledged as available to the second routing system 106, or vice versa. A failure to acknowledge a path reflects the fact that a routing system is not aware of the path. Alternatively, a routing system may deem travel on a particular road to be illegal or otherwise proscribed. In addition, or alternatively, the first routing system 104 chooses a path that is available to the second routing system 106, but the second routing system 106 chooses not to use it, or vice versa. In addition, or alternatively, the first route X and the second route Y describe the same physical path, but due to modeling differences and/or other algorithmic factors, the two routing systems (104, 106) do not agree on the geographical placement of the physical path. In addition, or alternatively, the first routing system 104 and the second routing system 106 assign different rules and/or traffic conditions to a same physical road, and so on.

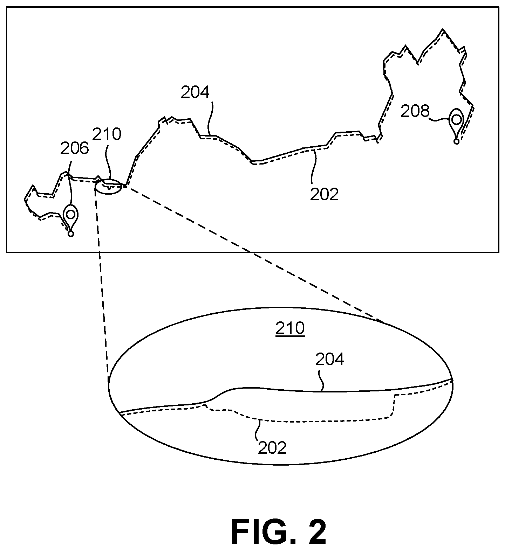

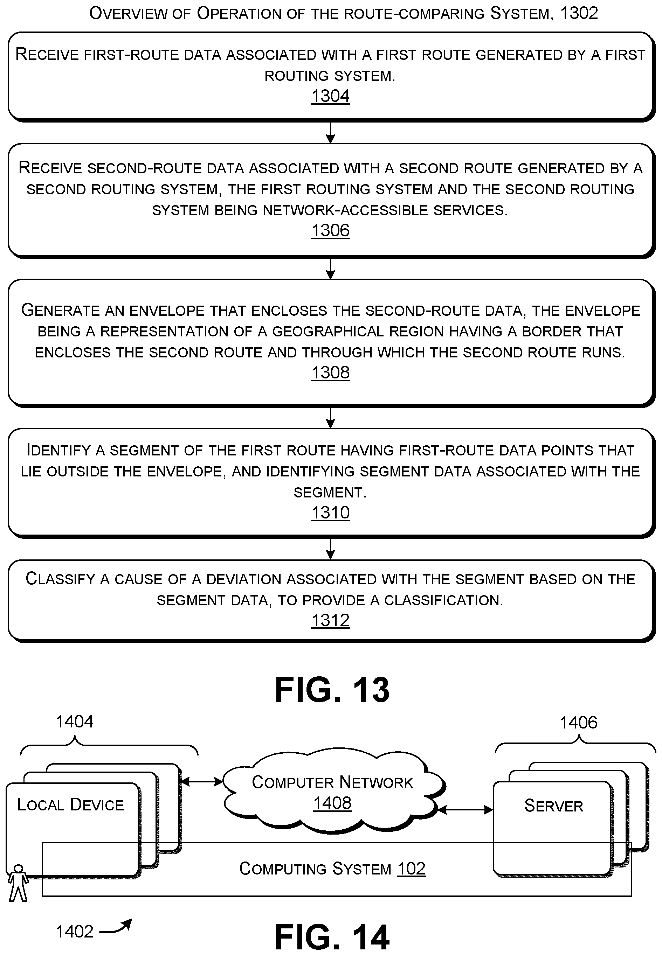

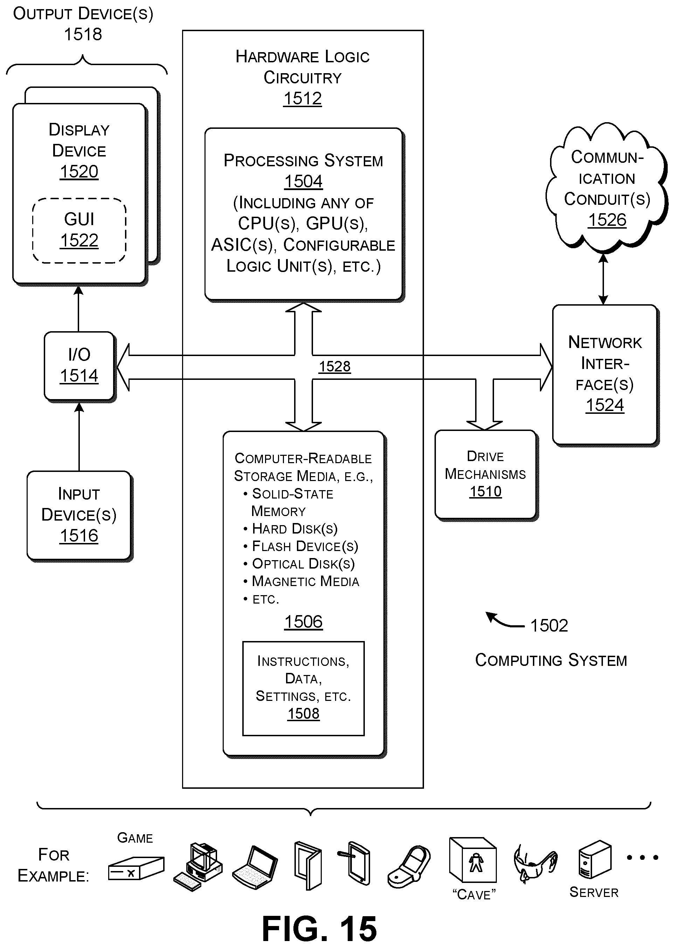

A route-comparing system 116 reliably compares the first route X with the second route Y to determine whether the routes (X, Y) deviate from each other, within a specified tolerance. The operations of the route-comparing system 116 will be summarized below. Additional details regarding each operation will be provided in the context of the explanation of Figs. 2-12. In some contexts, terms such as "component," "module," "engine," and "tool" refer to parts of computer-based technology that perform respective functions. Figs. 14 and 15, described below, provide examples of illustrative computing equipment for performing these functions.

In some implementations, the ultimate objective of the operations is to identify and remedy any discrepancies between the routes (X, Y) that may negatively impact the quality of routes produced by the first routing system 104. In this context, the second routing system 106 produces routes that serve as baseline references against which the quality of the first routes is evaluated. Alternatively, or in addition, the routes produced by the first routing system 104 serve as references for evaluating the routes produced by the second routing system 106. Alternatively, or in addition, any implementation can compare routes produced by three or more routing systems (not shown). To facilitate explanation, however, most examples presented herein assume that the routes produced by the second routing system 106 serve as references, and that downstream revisions are made (if any) to the first routing system 104.

A data-receiving component 118 receives first-route data that describes the first route X produced by the first routing system 104 and second-route data that describes the second route produced by the second routing system 106. In some examples, the data-receiving component 118 receives these instances of data in response to submitting the same route request to the first routing system 104 and the second routing system 106. In some implementations, the data-receiving component 118 also interpolates the received route data using any interpolation algorithm to provide a desired degree of separation between neighboring data points (e.g., 50 to 100 meters) along each route. A data store 120 stores the first-route data and the second-route data. The route-comparing system 116 can also perform on-demand interpolation at any later stage of analysis to provide the granularity of data that is expected at that later stage. In some implementations, on-demand interpolation is performed for only a local geographic focus of interest.

A mismatch-detecting component 122 detects deviations of the second-route data from the first-route data that satisfies prescribed rules, to be described below. In some examples, each portion of the pair of routes in which a deviation occurs is referred to herein as a mismatch segment, or segment for brevity. A segment has segment data that describes the data points of the first route and the second route that are associated with the deviation. A data store 124 stores the segment data.

A classifying component 126 classifies each deviation that has been detected by the mismatch-detecting component 122. The classifying component 126 stores its classification results in a data store 128. In some examples, in evaluating each deviation, the classifying component 126 chooses a classification from a group of candidate classifications. In some examples, the class of deviations includes: a) a map snapping-related difference that is associated with a discrepancy in associating route data with road network data; b) a difference caused by a permissible route diversion taken by the first route; c) a difference caused by a road that is non-navigable to the first routing system; and d) a difference in how the first routing system 104 and the second routing system 106 model the same physical roadway, and so on.

A post-processing component 130 performs any application-specification action(s) on the basis of the classification in the data store 128. The post-processing component 130 stores the results of its analysis in a data store 132. In some implementations, for example, the post-processing component 130 produces a set of route pairs that are verified by the route-comparing system 116 as being free of geospatial deviations, with a specified tolerance. Each such pairing includes a particular first route produced by the first routing system 104 and a particular second route produced by the second routing system 106. In some implementations, this set also includes route pairings that originally included deviations, but have been modified by the route-comparing system 116 to remove the deviations. The post-processing component 130 then performs any application-specific analysis based on the set of route pairings. For example, the post-processing component 130 computes and compares the estimated times of arrival of the two routes in each pair of routes.

A system-modifying component 134 optionally makes any kind of changes to the first routing system 104 based on the classification results in the data store 128 and/or the post-processing results in the data store 132. For example, in some examples, the system-modifying component 134 makes changes to the first routing logic 108 with the goal of improving the quality of routes produced by the first routing system 104, e.g., by updating one or more parameters used by the first routing logic 108. Alternatively, or in addition, the system-modifying component 134 makes changes to the first routing-system map data in the data store 110 to resolve issues that have been determined to have a negative impact on route quality. These kinds of changes encompass, for instance, modifying any data pertaining to roadway information and/or modifying data pertaining to traffic conditions, etc. These changes ultimately allow users to traverse physical routes in an efficient manner. For instance, in some cases, the changes reduce erroneous or non-ideal instructions given to the users traversing the routes. In other cases, the changes result in more efficient (e.g., more direct) routes being given to the users.

In some implementations, a lookup table provided in a data store (not shown) maps detected deviation profiles to possible corrective actions. A deviation profile describes characteristics of a detected deviation between the first route and the second route. The system-modifying component 134 consults the lookup table to determine what actions, if any, can be performed to the first routing system 104 to resolve or ameliorate an identified deviation between the first route and the second route, and to thereby improve the quality of routes given to end users. The system-modifying component 134 automatically executes the action(s), or queues up the proposed actions for an analyst's review. In some cases, the action(s) involve sending electronic instructions to the first routing system 104 that specify what change(s) are to be made to its logic and/or data. Note that whatever corrective action that is taken with respect to the first routing system 104, as described above, can alternatively, or in addition, be performed with respect to the second routing system 106.

The routing-comparing system 116 described above is resilient to differences between the first routing logic 108 used by the first routing system 104 and the second routing logic 112 used by the second routing system 106. In addition, the routing-comparing system 116 is resilient to differences between the first routing-system map data and the second routing-system map data. In contrast, other techniques for comparing data sets, such as Fréchet distance, are found to only produce reliable results if the two data sets are produced by the same data-generating framework. More specifically, these other approaches are capable of producing false negatives when confronted with data sets produced by different data-generating frameworks. A false negative occurs when an analysis system fails to detect a small but nonetheless significant deviation between a pair of routes. This risk grows as the lengths of the routes increase. This is because the significance of small deviations is diluted in the computations that are performed with respect to longer routes. Alternatively, or in addition, the other approaches produce false positives. A false positive occurs when an analysis system detects a deviation when, in fact, no significant deviation has occurred. This risk grows as the sensitivity of an alternative technique is increased in an effort to detect small but significant deviations. These kinds of failures have the further negative consequence of corrupting downstream calculations performed on the basis of the route comparisons.

Further, the routing-comparing system 116 is faster than some other techniques - in some cases by an order magnitude. For example, the route-comparing system 116 is capable of processing two routes of 700 miles in length in about a minute, whereas the Fréchet distance technique requires about an hour to perform the same task. The route-comparing system 116 achieves some of these results by relying on a discrete set of rules to compare routes in local zones of analysis, rather than performing the kind of iterative global analysis common to algorithms like the Fréchet distance. The route-comparing system 116 also uses less processing and memory resources compared to alternative techniques (such as Fréchet distance). This is because the route-comparing system 116 performs fewer operations compared to the alternative techniques, and has a commensurate reduction in the use of resources used to perform the operations in aggregate.

Fig. 2 shows an illustrative pair of first and second routes (202, 204) that both start at or near a starting location 206 and terminate at or near an ending location 208. When viewed from the perspective of their entire lengths, the routes (202, 204) appear to follow identical paths. But assume that the routes (202, 204) contain one or more deviations beyond a prescribed tolerance. For instance, assume that the routes (202, 204) includes a region 210 in which the first route 202 diverges from the second route 204 for a particular span, measured with reference to an envelope (not shown) associated with the second-route data. As used herein in some examples, an "envelope" is a representation of a geographical region having a border that encloses a specified route (e.g., the second route) and through which the specified route runs.

The route-comparing system 116 of Fig. 1 successfully identifies and classifies this deviation. For example, the route-comparing system 116 may attribute this deviation to the fact that the first routing system 104 and the second routing system 106 have a different understanding of paths that are available and legal to a traveler in this region 210. Alternatively, the route-comparing system 116 may attribute this deviation to the fact that the first routing system 104 and the second routing system 106 varying in what path they regard as the best path to take in the region 210. Alternatively, the routing-comparing system 116 may attribute this deviation to a difference in the ways that the first routing system 104 and the second routing system 106 model that same physical roadway, and so on. In some cases, alternative techniques, such as Fréchet distance, are unsuccessful in reliably detecting this deviation.

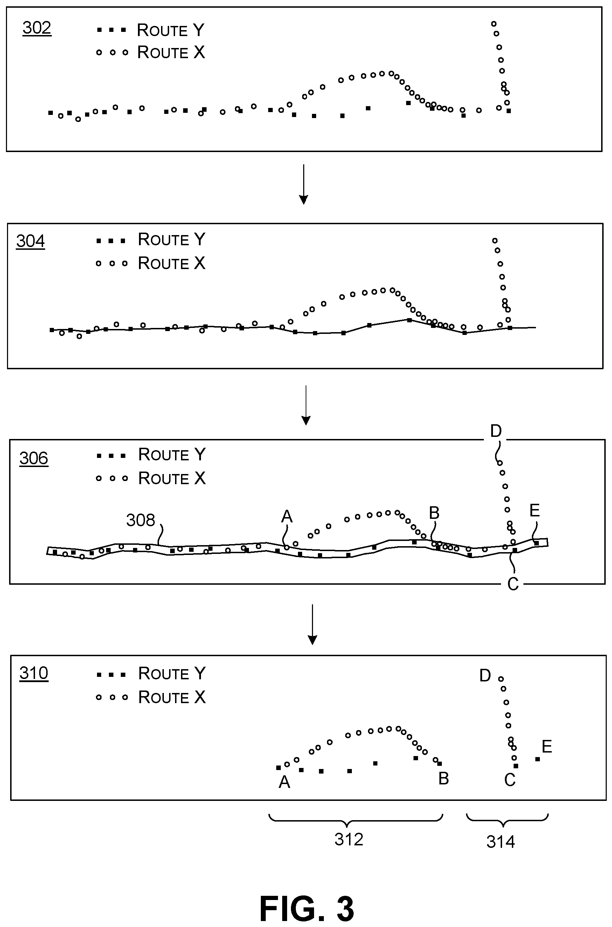

Fig. 3 shows the results of a series of actions performed by the mismatch-detecting component 122. As represented by a panel 302, assume that the mismatch-detecting component 122 receives first-route data associated with a first route X and second-route data associated with a second route Y, only a small portion of which is shown in Fig. 3. Assume that the second-route data serves as a reference against which the first-route data is compared. As represented by a second panel 304, the mismatch-detecting component 122 connects the second-route data points with line segments, to overall produce a route line that marks the trajectory of the second route. As represented by a third panel 306, the mismatch-detecting component 122 generates an envelope 308 having a prescribed width (e.g., 10 meters) around the route line. For example, the envelope 308 has a border that defines a polygon that is intersected by the route line. The mismatch-detecting component 122 then determines those first-route data points that lie inside and outside of the boundary of the envelope 308.

As represented by a fourth panel 310, the mismatch-detecting component 122 generates segment data for each deviation of the first route from the second route. For example, the mismatch-detecting component 122 identifies a first deviation 312 that is associated with first segment data, and a second deviation 314 that is associated with second segment data. The first deviation 312 occurs at an interim point in the course of the first and second routes that is neither at the beginning nor end of the routes. The second deviation 314 occurs at the end of the routes.

The first segment data associated with the first deviation 312 includes all of the first-route points associated with the first deviation 312 that lie outside the envelope 310. These first-route data points are bracketed by data points A and B, which lie inside the envelope 308. The data points A and B are also considered part of the first segment data. That is, data point A is the last first-route data point inside the envelope 310 before the series of first-route data points that lie outside the envelope 308. Data point B is the first first-route data point inside the envelope 310 after the series of first-route data points that lie outside of the envelope 308. Further, the first-route data points associated with the first deviation 312 include those second-route data points between the first-route data points A and B.

The second segment data associated with the second deviation 314 includes a common data point C prior to the divergence of the routes. Here, the data point C is a member of the second-route data points. The second segment data also includes a series of first-route data points that lie outside of the envelope, ending at first-route data point D. The second segment data also includes one or more second-route data points that terminate in a second-route data point E. That is, these second-route data points are associated with the second deviation 314 in the sense that they are part of the complete description of how the first route diverges from the second route.

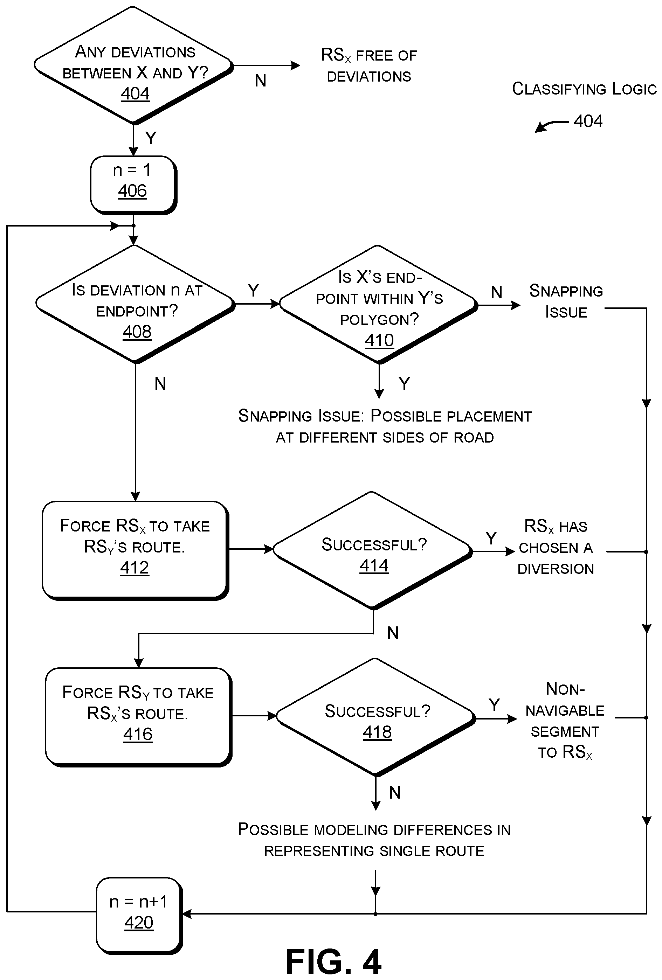

Fig. 4 shows an overview of logic 402 applied by the classifying component 126 for classifying each deviation detected by the routing-comparing system 116 of Fig. 1 Each deviation is associated with the kind of data described above with reference to Fig. 3. In block 404, the classifying component 126 determines whether the first route X provided by the first routing system RSx 104 has no spatial deviations along its span with respect to the second route Y provided by the first routing system RS_{Y} 104, with respect to the degree of tolerance defined by the envelope 308.

If there are, in fact, deviations between the first route and the second route, then the classifying component 126 attempts to classifying each deviation. In the implementation of Fig. 4, the classifying component 126 classifies one deviation at a time in a loop, but in other implementations, the classifying component 126 classifies deviations in parallel. In block 406, the classifying component 126 sets a deviation counter n to 1. Assume that the deviation under consideration includes a first path taken by the first route X and that diverges from a second path taken by the second route Y.

In block 408, the classifying component 126 determines whether the deviation n under consideration occurs at the beginnings or ends of the routes. This is the case for the second deviation 314 shown in Fig. 3. These types of deviations are often associated with map snapping-related discrepancies. In such a case, the first routing system 104 varies from the second routing system 106 in the manner in which it associates (e.g., "snaps") a route data point to a preexisting roadway data point. There are two variants of map snapping-related discrepancies. Block 410 discriminates between these two variants. In a first case, the endpoint (or starting point) of the first route lies outside the envelope 308 associated with the second route. The first case may be due to the fact that the two routing systems (104, 106) have mapped a user's start and/or end location(s) to different nearby roads. Alternatively, the two routing systems (104, 106) may have mapped a user's start and/or end location(s) to different physical locations due to variation in how a text-based route request is interpreted. More specifically, consider an example in which a location point given to the routing systems (104, 106) lies in the middle of a park. The two routing systems (104, 106) could snap this location to different roads that border the park. Similarly, consider an example in which a given location point lies inside a building. The two routing systems (104, 106) can snap this location to two different roads outside the building, one closer to the building than the other. In a second case, the endpoint of the first route lies within the envelope 308. The second case may occur because the first routing system 104 and the second routing system 106 snap route points to opposite sides of the same roadway that is described in their respective instances of map data. For example, assume that a location point given to the two routing systems (104, 106) lies on a divider of a two-lane road. The two routing systems (104, 106) may map this location to different lanes of the road. In another case, the given location point is located inside a building. The two routing systems (104, 106) may snap this location to different sides of a road that lies outside the building. Generally, in some cases, a snapping discrepancy may be attributed to the fact that at least one of the routing systems (104, 106) has misinterpreted a given data point, or interpreting the given data point in an otherwise non-optimal manner. In other cases, the instructions given to the routing systems (104, 106) provide no basis for judging between two or more valid road locations.

Alternatively, assume that block 408 is answered in the negative, indicating that the deviation under consideration does not occur at the end of the routes. If so, in block 412, the classifying component 126 requests the first routing system 104 to follow the second path taken by the second route Y. In some implementations, the classifying component 126 performs this task via a map-snapping application programming interface (API) call to the first routing system 104. The request asks the routing system 104 to constrain its route X such that it follows the roadway associated with the second path, if feasible.

The classifying component 126 receives route data in response to its request. Then, in block 414, the classifying component 126 determines whether the rerouted first route lies within the envelope associated with the second route. If so, the classifying component 126 determines that the first routing system 104 is able to successfully traverse the second path used by the second routing system 106, with no deviations between the paths (which now both follow the roadway associated with the second path). This means that the first routing system 104 is able to take the first path or the second path; but the first routing system 104 has originally chosen to take the first path for any system-specific reason. As a result, the classifying component 126 labels the deviation as a diversion. This means that the first routing system 104 has chosen to take a presumably valid alternative path (the first path) available to it based on the particular manner in which it priorities alternative paths.

Assume that block 414 is alternatively answered in the negative, indicating that the first routing system 104 cannot successfully follow the second path taken by the second routing system 106. If so, in block 416, the classifying component 126 requests the second routing system 106 to follow the first path taken by the first routing system 104, e.g., via a map-snapping API call to the second routing system 106. In response, the classifying component 126 receives routing data from the second routing system 106 that reflects an outcome of the request.

In block 418, the classifying component 126 determines whether the results indicate that the second routing system 106 is able to successfully follow the first path chosen by the first routing system 104 (in such a manner that the first route lies within the envelope of the rerouted second route). If so, then the classifying component 126 classifies the deviation under consideration as indicative of a path that is non-navigable to the first routing system 104. In other words, this finding indicates that the second path taken by the second routing system 106 is potentially a roadway segment that is non-navigable to the first routing system 104 for some reason.

Alternatively assume that, in block 416, the classifying component 126 concludes that the second routing system 106 cannot successfully follow the first path taken by the first routing system 104. This means that the paths selected by the first routing system 104 and the second routing system 106 are mutually unavailable to each other. In some cases, this finding is attributable to the fact that the first routing system 104 and the second routing system 106 are applying different models to describe a same physical roadway. This results in the different understandings between the first routing system 104 and the second routing system 106 as to the geographical placement of the physical roadway.

In block 420, the classifying component 126 increments n, which causes the classifying component 126 to repeat the above operations for the next deviation (if any) under consideration. The classifying component 126 stores information regarding all of its classifications in the data store 128. In some cases, the classifications are proposed or tentative because they have not yet been confirmed by a human analyst and/or a downstream automated classifying engine.

Note that, in the above description, the route Y produced by the second routing system 106 served as a de facto reference route against which the first route X is compared. In other implementations, the route-comparing system 116 repeats the operations described above for the mirror case in which the first route X serves as a reference route against which the second route is compared. In this case, the mismatch-detecting component 122 will draw an envelope around route X and detect those portions in which route Y strays outside of route X's envelope. The envelope is a representation of a geographical region having a border that encloses the first route and through which the first route runs. The classifying component 126 then applies the tests of Fig. 4 for each detected deviation. As a whole, the route-comparing system 116 aggregates all detected deviations and proposed classifications for the case in which routes X and Y alternatively serve as a reference route.

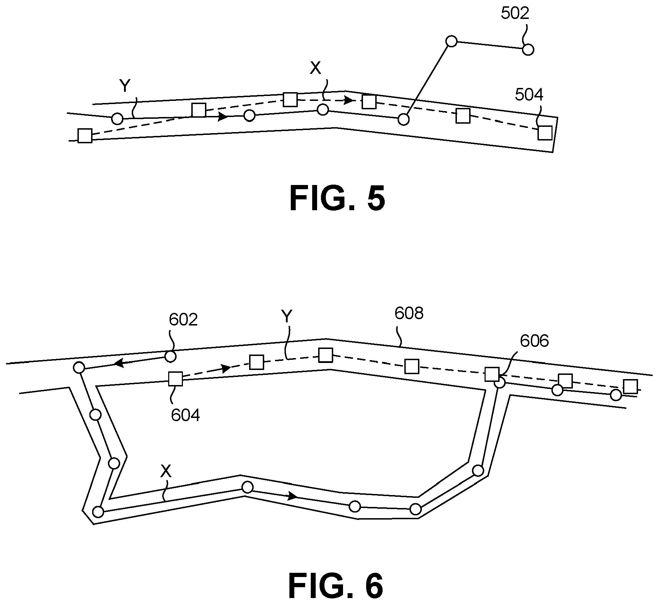

Fig. 5 shows a first example of a map snapping-related discrepancy detected in blocks 408 and 410 of Fig. 4. In this case, the route X ends at a data point 502, and the route Y ends in a data point 504. Assume that the terminal data point 502 of the route X lies outside an envelope associated with route Y, and the terminal data point 504 of the second route Y lies inside this envelope. This may be due to any of the circumstances identified above, such as when the two routing systems (104, 106) snap a user's end location to different nearby roads or physical locations.

Fig. 6 shows a second example of a map snapping-related discrepancy detected in blocks 408 and 410 of Fig. 4. The route X starts at a data point 602, upon which the user moves leftward. The route Y starts at a data point 604, upon which the user moves rightward. The users reunite along the same path at juncture 606, and continue to move rightward. Assume that both of the data points (602, 604) lie inside an envelope associated with the second route Y. This particular discrepancy may reveal that the first routing system 104 and the second routing system 106 have snapped the data points (602, 604) to different sides of the same physical roadway. More specifically, assume that the topmost road 608 has two lanes, with traffic moving in opposite directions on those lanes. The routing systems (104, 106) may have snapped the beginnings of the two routes to different lanes on the road 608.

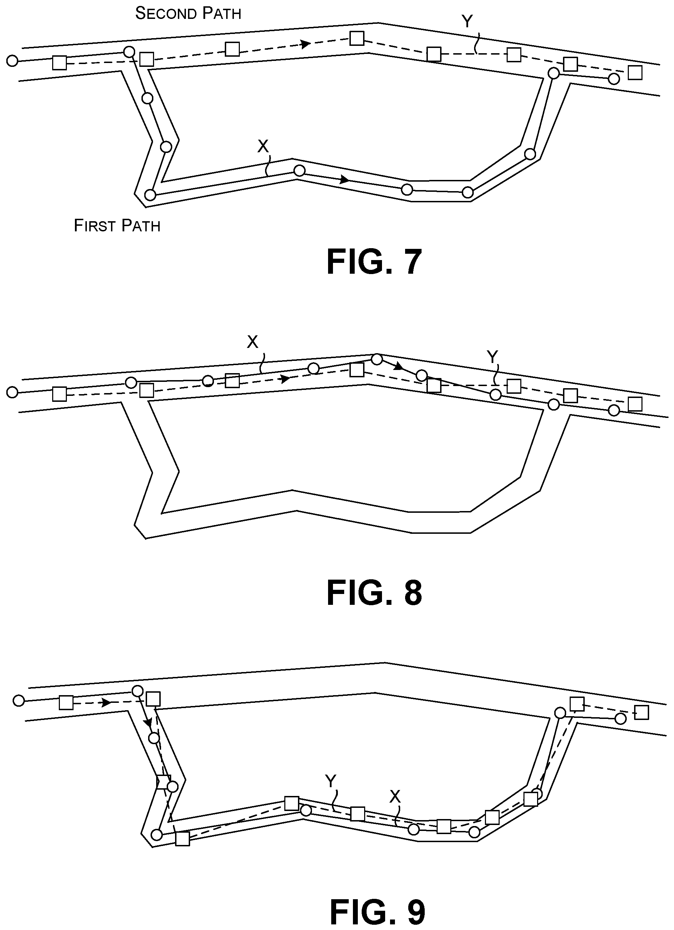

Fig. 7 shows a deviation in which, at some juncture along their respective spans, the first route X diverges to a first path, while the second route Y takes a second path which is different than the first path. At a later juncture, the first route X rejoins the same path taken by the second route Y. This is an example of a deviation that does not occur at an endpoint of the first and second routes.

Fig. 8 shows an outcome of the operation of block 412, in which the first routing system 104 is requested to follow the second path. In block 414, a conclusion is made that the first routing system 104 is able to successfully take the second path of the route Y. This, in turn, is indicative of the fact that the first routing system 104 had two options available to it, and, based on its routing logic 108, has decided to take the first path rather than the second path. In other words, this deviation is indicative of a permissible diversion.

Fig. 9 shows an outcome of block 416 in which the second routing system 106 is requested to follow the first path. In block 418, a conclusion is made that the second routing system 106 is able to successfully follow the first path. In one interpretation, this outcome suggests that the first routing system 104 chooses the first path because it has concluded that the second path is unavailable to it due to some illegality or other factor, or the first routing system 104 is unaware of the second path.

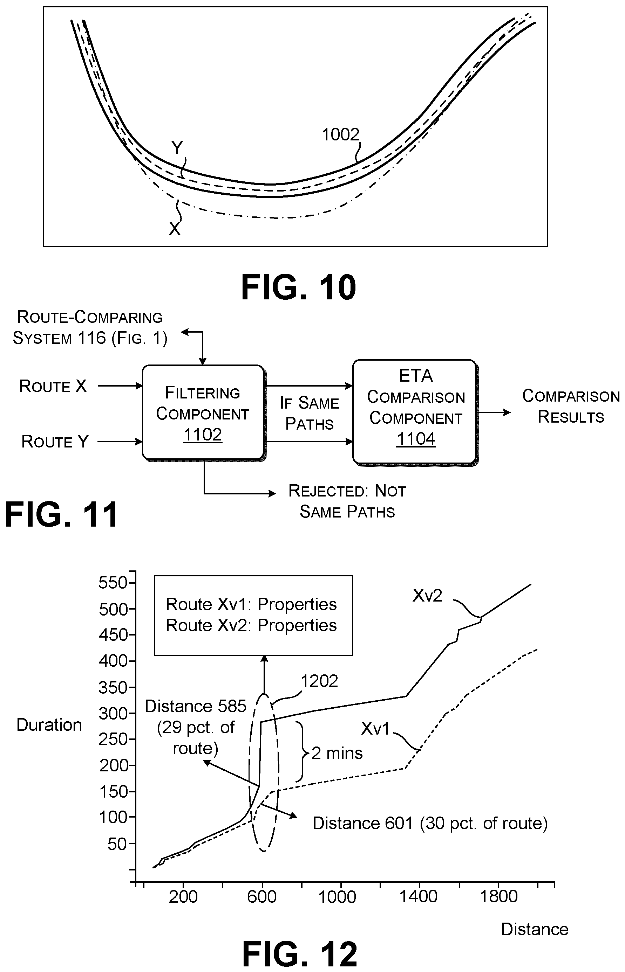

Assume, on the other hand, that the second routing system 106 cannot successfully follow the first path. In some cases, this outcome suggests that there is a modeling discrepancy between the first and second routes. Fig. 10 is an example of this outcome. More specifically, Fig. 10 shows a physical roadway 1002. The second routing system 106 chooses a route Y that generally geographically coincides with the actual roadway 1002. The first routing system 104 chooses a path X that geographically veers from the physical roadway 1002 in some locations. This phenomenon is particularly common in hilly areas, in which there is a greater variation in the ways in which different routing systems model the course of a physical roadway. In other examples, the path Y veers from the roadway and the path X adheres to the roadway. In other examples, both the paths X and Y veer from the physical roadway at the same time and/or at different respective times.

Fig. 11 shows one implementation of the post-processing component 130 that uses the results of the route-comparing system 116 to compare the estimated time of arrival (ETA) of a first route X produced by the first routing system 104 with the ETA of a second route Y produced by the second routing system 106. A filtering component 1102 first consults the route-comparing system 116 to determine whether the two routes (X, Y) follow the same path within a specified tolerance. In a first case, the filtering component 1102 determines that the two routes (X, Y) follow the same paths in their original states, with a prescribed tolerance (to accommodate certain deviations due to discrepancies in modeling approaches, etc.). In a second case, the filtering component 1102 determines that the two routes (X, Y) do not share the same paths, but that the first route X can be successfully snapped to the same path as the second route Y, within a prescribed tolerance. In the first case, the pair of routes (X, Y) are passed to an ETA comparison component 1102 for further analysis. In the second case, the modified pair of routes (X, Y) (in which the routes are forced to follow a same path) are also passed to the ETA comparison component 1102 for further analysis. In a third case, the filtering component 1102 determines that the two routes (X, Y) do not follow the same path and the route X cannot be induced to successfully follow the path of the route Y. This pair of routes is rejected for further ETA-related analysis.

With respect to a pair of routes (X, Y) that has passed analysis, the ETA comparison component 1104 compares the ETA of the first route X with the ETA of the second route Y, and determines whether the difference between these two ETAs exceeds a prescribed threshold value. If so, the ETA comparison component 1104 flags the pair of routes (X, Y) as anomalous. In other implementations, assume that there is data available that describes the traversal of the same routes (X, Y) over the course of a prescribed timeframe, such as over the course of a day. Here, the ETA comparison component 1104 can compare an average ETA associated with the separate traversals of the first route X with an average ETA associated with the separate traversals of the second route Y. In yet other cases, the type of analysis described above is performed for some other route metric besides ETA, such as average speed during the traversal of the routes, etc.

An analyst may choose to respond to an anomalous ETA indication in different ways. In one approach, assume that the route X reflects a path taken by a particular version of the first routing system 104 (e.g., v2), and therefore may be referred to as route Xv2. Further assume that there is data available or dynamically reproducible that reflects a counterpart route Xv1 taken by an earlier version of the first routing system 104 (e.g., v1). Or assume that data is available that reflects an earlier traversal of the same route by the same version of the routing system 104, e.g., on a previous day of the same week. In either of these cases, the analyst can interact with the ETA analysis component 1106 to generate duration-vs-distance plots for routes Xv2 and Xv1. That is, each plot shows the amount of time that has transpired in the traversal of a route as a function of distance that has been traveled in the traversal of the route. A discrepancy between the plots for Xv2 and Xv1 is indicative of an anomaly that has occurred in the traversal of one of the routes (Xv1, Xv2). Since the first version (v1) of the routing system 104 should be stable, the presumption is that the deviation is due to some issue affecting the route Xv2 produced by the second version (v2) of the routing system 104.

Fig. 12 shows an example of a discrepancy between routes Xv2 and Xv1. As indicated there, the duration of the route Xv2 markedly departs from the duration of the route Xv1 at a particular juncture 1202 into the trips, associated with a particular distance into the trip. The analyst may further interact with the ETA comparison component 1104 to compare the properties of the routes (Xv2 and Xv1) in the juncture 1202. This comparison may reveal the source of the discrepancy between the routes (Xv2, Xv1). The analyst may further choose to examine a visual depiction of the two routes (Xv2, Xv1) in the juncture 1202. Note that the routes Xv1 and Xv2 are comparable at the juncture 1202 because the two routes originally traversed the same physical path (e.g., the same roadway(s)), or were modified so that they follow the same physical path.

Fig. 13 shows a process 1302 that represents an overview of one manner of operation of the route-comparing system 116 of Fig. 1. The process 1302 is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. **14** and 15.

More specifically, Fig. 13 shows a process 1302 for identifying and classifying route deviations. In block 1304, the route-comparing system 116 receives first-route data associated with a first route generated by a first routing system (e.g., the first routing system 104). In block 1306, the route-comparing system 116 receives second-route data associated with a second route generated by a second routing system (e.g., the second routing system 106), the first routing system and the second routing system being network-accessible services. In block 1308, the route-comparing system 116 generates an envelope that encloses the second-route data. In block 1310, the route-comparing system 116 identifies a segment of the first route having first-route data points that lie outside the envelope, and identifies segment data associated with the segment. In block 1312, the route-comparing system 116 classifies a cause of a deviation associated with the segment based on the segment data, to provide a classification. In block 1314, the route-comparing system 116 performs an action based on the classification, results of which are usable to improve performance of the first routing system and/or the second routing system by modifying the first routing system and/or the second routing system.

Fig. 14 shows computing equipment 1402 that, in some implementations, is used to implement the computing system 102. The computing equipment 1402 includes a set of local devices 1404 coupled to a set of servers 1406 via a computer network 1408. Each local device corresponds to any type of computing device, including any of a desktop computing device, a laptop computing device, a handheld computing device of any type (e.g., a smartphone or a tablet-type computing device), a mixed reality device or a virtual reality device, an intelligent appliance, a wearable computing device (e.g., a smart watch), an Internet-of-Things (IoT) device, a vehicle-borne computing system, etc. In some implementations, the computer network 1408 is implemented as a local area network, a wide area network (e.g., the Internet), one or more point-to-point links, or any combination thereof.

The bottom-most overlapping box in Fig. 14 indicates that the functionality of the computing system 102 is capable of being spread across the local devices 1404 and/or the servers 1406 in any manner. In one example, the computing system 102 is entirely implemented by one or more local devices. In another example, the functions of the computing system 102 are entirely implemented by the servers 1406. Here, a user is able to interact with the servers 1406 via a browser application running on a local device. In other examples, some of the functions of the computing system 102 are implemented by one or more local devices, and other functions of the computing system 102 are implemented by the servers 1406. In some implementations, for instance, the first and second routing systems (104, 106) are implemented by the servers 1406, and the route-comparing system 116 is implemented by one or more local devices.

Fig. 15 shows a computing system 1502 that, in some implementations, is used to implement any aspect of the mechanisms set forth in the above-described figures. For instance, in some implementations, the type of computing system 1502 shown in Fig. 15 is used to implement any local computing device or any server shown in Fig. 16. In all cases, the computing system 1502 represents a physical and tangible processing mechanism.

The computing system 1502 includes a processing system 1504 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 1502 also includes computer-readable storage media 1506, corresponding to one or more computer-readable media hardware units. The computer-readable storage media 1506 retains any kind of information 1508, such as machine-readable instructions, settings, model weights, and/or other data. In some implementations, the computer-readable storage media 1506 includes one or more solid-state devices, one or more hard disks, one or more optical disks, etc. Any instance of the computer-readable storage media 1506 uses any technology for storing and retrieving information. Further, any instance of the computer-readable storage media 1506 represents a fixed or removable unit of the computing system 1502. Further, any instance of the computer-readable storage media 1506 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 1502 utilizes any instance of the computer-readable storage media 1506 in different ways. For example, in some implementations, any instance of the computer-readable storage media 1506 represents a hardware memory unit (such as random access memory (RAM)) for storing information during execution of a program by the computing system 1502, and/or a hardware storage unit (such as a hard disk) for retaining/archiving information on a more permanent basis. In the latter case, the computing system 1502 also includes one or more drive mechanisms 1510 (such as a hard drive mechanism) for storing and retrieving information from an instance of the computer-readable storage media 1506.

In some implementations, the computing system 1502 performs any of the functions described above when the processing system 1504 executes computer-readable instructions stored in any instance of the computer-readable storage media 1506. For instance, in some implementations, the computing system 1502 carries out computer-readable instructions to perform each block of the processes described with reference to Fig. 13. Fig. 15 generally indicates that hardware logic circuitry 1512 includes any combination of the processing system 1504 and the computer-readable storage media 1506.

In addition, or alternatively, the processing system 1504 includes one or more other configurable logic units that perform operations using a collection of logic gates. For instance, in some implementations, the processing system 1504 includes a fixed configuration of hardware logic gates, e.g., that are created and set at the time of manufacture, and thereafter unalterable. In addition, or alternatively, the processing system 1504 includes a collection of programmable hardware logic gates that are set to perform different application-specific tasks. The latter category of devices includes programmable array logic devices (PALs), generic array logic devices (GALs), complex programmable logic devices (CPLDs), field-programmable gate arrays (FPGAs), etc. In these implementations, the processing system 1504 effectively incorporates a storage device that stores computer-readable instructions, insofar as the configurable logic units are configured to execute the instructions and therefore embody or store these instructions.

In some cases (e.g., in the case in which the computing system 1502 represents a user computing device), the computing system 1502 also includes an input/output interface 1514 for receiving various inputs (via input devices 1516), and for providing various outputs (via output devices 1518). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 1520 and an associated graphical user interface presentation (GUI) 1522. The display device 1520 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 1502 also includes one or more network interfaces 1524 for exchanging data with other devices via one or more communication conduits 1526. One or more communication buses 1528 communicatively couple the above-described units together.

The communication conduit(s) 1526 is implemented in any manner, e.g., by a local area computer network, a wide area computer network (e.g., the Internet), point-to-point connections, or any combination thereof. The communication conduit(s) 1526 include any combination of hardwired links, wireless links, routers, gateway functionality, name servers, etc., governed by any protocol or combination of protocols.

Fig. 15 shows the computing system 1502 as being composed of a discrete collection of separate units. In some cases, the collection of units corresponds to discrete hardware units provided in a computing device chassis having any form factor. Fig. 15 shows illustrative form factors in its bottom portion. In other cases, the computing system 1502 includes a hardware logic unit that integrates the functions of two or more of the units shown in Fig. 15. For instance, in some implementations, the computing system 1502 includes a system on a chip (SoC or SOC), corresponding to an integrated circuit that combines the functions of two or more of the units shown in Fig. 15.

The following summary provides a set of illustrative examples of the technology set forth herein.

(A1) According to one aspect, a computer-implemented method (e.g., the process 1302) is described for identifying and classifying route deviations. The method includes: receiving (e.g., in block 1304) first-route data associated with a first route generated by a first routing system (e.g., the first routing system 104); receiving (e.g., in block 1306) second-route data associated with a second route generated by a second routing system (e.g., the second routing system 106), the first routing system and the second routing system being network-accessible services; generating (e.g., in block 1308) an envelope that encloses the second-route data; identifying (e.g., in block 1310) a segment of the first route having first-route data points that lie outside the envelope, and identifying segment data associated with the segment; classifying (e.g., in block 1312) a cause of a deviation associated with the segment based on the segment data, to provide a classification; and performing (e.g., in block 1314) an action based on the classification, results of which are usable to improve performance of the first routing system and/or the second routing system by modifying the first routing system and/or the second routing system. In some cases, the modification involves changing the data and/or logic on which the first routing system and/or the second routing system rely to generate their routes.

(A2) According to some implementations of the method of A1, the border defines a polygon that includes the second-route data.

(A3) According to some implementations of the methods of A1 or A2, the method further includes submitting a same routing request to the first routing system and the second routing system, the routing request specifying a starting location and an ending location. The first routing system uses first routing logic to produce the first route between the starting location and the ending location based on first routing-system map data, and the second routing system uses second routing logic to produce the second route between the starting location and the ending location based on second routing-system map data.

(A4) According to some implementations of the method of A3, the first routing logic is different than the second routing logic, and/or the first routing-system map data is different than the second routing-system map data.

(A5) According to some implementations of any of the methods of A1-A4, a first of the first-route data points that lie outside the envelope is preceded by a neighboring first-route data point that lies inside the envelope, and the segment data includes the first-route data points outside the envelope and the neighboring first-route data point.

(A6) According to some implementations of the method of A5, the segment data points also include second-route data points of the second route associated with the divergence.

(A7) According to some implementations of any of the methods of A1-A6, the classifying includes: determining that the segment encompasses a beginning or end of the first route and the second route; and in response to the determining, identifying a cause of the deviation as a difference in how the first and second routing systems associate route information with road network data.

(A8) According to some implementations of any of the methods of A1-A6, the segment is associated with a first path taken by the first route and a second path taken by the second route that is different than the first path, and the classifying includes: determining that the first routing system is able to successfully take the second path; and in response to the determining, identifying a cause of the deviation as a permissible diversion taken by the first routing system.

(A9) According to some implementations of any of the methods of A1-A6, the segment is associated with a first path taken by the first route and a second path taken by the second route that is different than the first path, and the classifying includes: in a first determining operation, determining that the first routing system is unable to successfully take the second path; in a second determining operation, determining that the second routing system is able to successfully take the first path; and in response to the first and second determining operations, identifying a cause of the deviation as non-navigability of the second path by the first routing system.

(A10) According to some implementations of any of the methods of A1-A6, the segment is associated with a first path taken by the first route and a second path taken by the second route that is different than the first path, and the classifying includes: in a first determining operation, determining that the first routing system is unable to successfully take the second path; in a second determining operation, determining that the second routing system is unable to successfully take the first path; and in response to the first and second determining operations, identifying a cause of the deviation as a road modeling discrepancy between the first routing system and the second routing system.

(A11) According to some implementations of any of the methods of A1-A10, the action that is performed following classifying includes: identifying another pair of routes, including a particular first route and a particular second route that are determined to follow a same path, with respect to a prescribed tolerance; determining a first estimated time of arrival of the first particular route and a second estimated time of arrival of the second particular route; and determining a difference between the first estimated time of arrival and the second estimated time of arrival, and comparing the difference to a threshold value.

(A12) According to some implementations of the method of A11, the identifying another pair of routes includes: determining that the first particular route and the second particular route in their original respective states contained a deviation from each other; and modifying the first particular route so that it follows a path of the second particular route, to remove the deviation that has been determined, within the prescribed tolerance.

(A13) According to some implementations of any of the methods of A1-A12, the method further includes repeating analysis for a case in which roles of the first route and the second route are reversed, including: generating a first-route envelope that encloses the first-route data; identifying a second-route segment of the second route having second-route data points that lie outside the first-route envelope, and identifying second-route segment data associated with the segment; and classifying a cause of a deviation associated with the second-route segment based on the second-route segment data, to provide a classification.

(A14) According to some implementations any of the methods of A1-A13, the method further includes identifying a modification to be made to the first routing system and/or second routing system based on the classification, and making the modification to the first routing system and/or the second routing system.

In yet another aspect, some implementations of the technology described herein include a computing system (e.g., the computing system 1502) that includes a processing system (e.g., the processing system 1504) having a processor. The computing system also includes a storage device (e.g., the computer-readable storage media 1506) for storing computer-readable instructions (e.g., the information 1508). The processing system executes the computer-readable instructions to perform any of the methods described herein (e.g., any individual method of the methods of A1-A14).

In yet another aspect, some implementations of the technology described herein include a computer-readable storage medium (e.g., the computer-readable storage media 1506) for storing computer-readable instructions (e.g., the information 1508). A processing system (e.g., the processing system 1504) executes the computer-readable instructions to perform any of the operations described herein (e.g., the operations in any individual method of the methods of A1-A14).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any mention of a single entity is not intended to preclude the use of plural such entities; similarly, a description of plural entities in the specification is not intended to preclude the use of a single entity. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 1512 of Fig. 15. The term "logic" likewise encompasses various physical and tangible mechanisms for performing a task. For instance, each processing-related operation illustrated in Fig. 13 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method (1302) for identifying and classifying route deviations, comprising:
receiving (1304) first-route data associated with a first route generated by a first routing system (104);
receiving (1306) second-route data associated with a second route generated by a second routing system (106), the first routing system (104) and the second routing system (106) being network-accessible services;
generating (1308) an envelope that encloses the second-route data, the envelope being a representation of a geographical region having a border that encloses the second route and through which the second route runs;
identifying (1310) a segment of the first route having first-route data points that lie outside the envelope, and identifying segment data associated with the segment;
classifying (1312) a cause of a deviation associated with the segment based on the segment data, to provide a classification; and
performing (134) an action based on the classification, results of which are usable to improve performance of the first routing system (104) and/or the second routing system (106) by modifying the first routing system (104) and/or the second routing system (106).

2. The computer-implemented method of claim 1, wherein the border defines a polygon that includes the second-route data.

3. The computer-implemented method of claim 1,
further comprising submitting a same routing request to the first routing system and the second routing system, the routing request specifying a starting location and an ending location, and
the first routing system using first routing logic to produce the first route between the starting location and the ending location based on first routing-system map data, and the second routing system using second routing logic to produce the second route between the starting location and the ending location based on second routing-system map data,
optionally wherein at least one of the following is provided: the first routing logic is different than the second routing logic, the first routing-system map data is different than the second routing-system map data.

4. The computer-implemented method of claim 1, wherein a first of the first-route data points that lie outside the envelope is preceded by a neighboring first-route data point that lies inside the envelope, and wherein the segment data includes the first-route data points outside the envelope and the neighboring first-route data point.

5. The computer-implemented method of claim 4, wherein the segment data points also include second-route data points of the second route associated with the divergence.

6. The computer-implemented method of claim 1, wherein the classifying includes:
determining that the segment encompasses a beginning or end of the first route and the second route; and
in response to the determining, identifying a cause of the deviation as a difference in how the first and second routing systems associate route information with road network data.

7. The computer-implemented method of claim 1, wherein the segment is associated with a first path taken by the first route and a second path taken by the second route that is different than the first path, and wherein the classifying includes:
determining that the first routing system is able to successfully take the second path; and
in response to the determining, identifying a cause of the deviation as a permissible diversion taken by the first routing system.

8. The computer-implemented method of claim 1, wherein the segment is associated with a first path taken by the first route and a second path taken by the second route that is different than the first path, and wherein the classifying includes:
in a first determining operation, determining that the first routing system is unable to successfully take the second path;
in a second determining operation, determining that the second routing system is able to successfully take the first path; and
in response to the first and second determining operations, identifying a cause of the deviation as non-navigability of the second path by the first routing system.

9. The computer-implemented method of claim 1, wherein the segment is associated with a first path taken by the first route and a second path taken by the second route that is different than the first path, and wherein the classifying includes:
in a first determining operation, determining that the first routing system is unable to successfully take the second path;
in a second determining operation, determining that the second routing system is unable to successfully take the first path; and
in response to the first and second determining operations, identifying a cause of the deviation as a road modeling discrepancy between the first routing system and the second routing system.

10. The computer-implemented method of claim 1, wherein the action that is performed following classifying comprises:
identifying another pair of routes, including a particular first route and a particular second route that are determined to follow a same path, with respect to a prescribed tolerance;
determining a first estimated time of arrival of the first particular route and a second estimated time of arrival of the second particular route; and
determining a difference between the first estimated time of arrival and the second estimated time of arrival, and comparing the difference to a threshold value.

11. The computer-implemented method of claim 10, wherein the identifying another pair of routes includes:
determining that the first particular route and the second particular route in their original respective states contained a deviation from each other; and
modifying the first particular route so that it follows a path of the second particular route, to remove the deviation that has been determined, within the prescribed tolerance.

12. The computer-implemented method of claim 1, further comprising repeating analysis for a case in which roles of the first route and the second route are reversed, including:
generating a first-route envelope that encloses the first-route data, the first-route envelope being a representation of a geographical region having a border that encloses the first route and through which the first route runs;
identifying a second-route segment of the second route having second-route data points that lie outside the first-route envelope, and identifying second-route segment data associated with the segment; and
classifying a cause of a deviation associated with the second-route segment based on the second-route segment data, to provide a classification.

13. The computer-implemented method of claim 1, further comprising identifying a modification to be made to the first routing system and/or the second routing system based on the classification, and making the modification to the first routing system and/or the second routing system.

14. A processing system having a processor and a storage device that is configured to perform the computer-implemented method according to any of claims 1-13.

15. A computer-readable storage medium for storing computer-readable instructions that, when executed by a processing system, perform the computer-implemented method according to any of claims 1-13.
